Europäisches Patentamt

(19) European Patent Office

Office européen des brevets

(11) Publication number: **0 461 927 A2**

# (12) EUROPEAN PATENT APPLICATION

(21) Application number: **91305424.3**

(22) Date of filing: **14.06.91**

(51) Int. Cl.⁵: **G07B 5/04**

(30) Priority: **14.06.90 AU 639/90**

(43) Date of publication of application:
**18.12.91 Bulletin 91/51**

(84) Designated Contracting States:
**AT BE CH DE DK ES FR GB GR IT LI LU NL SE**

(71) Applicant: **STATE TRANSIT AUTHORITY OF NEW SOUTH WALES**
Level 29, 100 Miller Street
North Sydney, New South Wales 2060 (AU)

(72) Inventor: **Martin, Peter Robert**
25 Platypus Road, Berkeley Vale
New South Wales 2259 (AU)
Inventor: **Jacob, Raymond Leonard**
Unit 12, 58-60 Rainbow Street
Kingsford, New South Wales 2032 (AU)
Inventor: **James, Owen Francis**
22 Elissa Crescent, Wyoming
New South Wales 2250 (AU)

(74) Representative: **Pennant, Pyers et al**
Stevens, Hewlett & Perkins 1 Serjeants' Inn
Fleet Street
London EC4Y 1LL (GB)

(54) Transit operators revenue accounting system.

㉗ A system for selling tickets and accounting for their sale is disclosed. The system generally includes a number of depots (1) each of which servicing a plurality of operators (2) each of whom act to sell tickets (10) to patrons of the system. The issuing of tickets (10) is controlled at a ticket distribution point (12) whereby tickets are scanned (3) to record in a local computer (4) those tickets (10) issued to an operator (2). Subsequent to the sale of the tickets (10) the operator (2) deposits monies (11) into a counting machine (5) which records a transaction value within the local computer (4). An invoice is printed (9) for each operator (2). Revenue data is transferable about the system via communications network (6) between depots (1) and central computer (7) which includes a data base (8) of statistical information.

EP 0 461 927 A2

The present invention relates to a method of, and a system for, the selling of tickets and the account of the sale of those tickets. The system is based on a principle where all users of the system are deemed to be debtors to the system. The system comprises three modules. The first module being a ticket sales/management module (including on board ticketing interface). The second module consists of a revenue detection package and the third module being an in-transit engineering package interfaced to the in-transit ticketing system. In particular, the present invention relates to the situation where the issuing of the tickets takes place by a large number of mobile operators and also includes static locations such as ticket agents. The present invention is particularly applicable to the transport industry (bus and tram systems being good examples), parking stations and debtor based coin vending operations.

Conventional systems of ticket sale and accounting are highly labour intensive. Such systems rely upon the sale of individually numbered tickets by a transport operator. The monies received from the ticket sales over the course of an operator's shift, are manually counted at the end of the shift. Also, the numbers of unsold tickets are manually recorded and reconciled against those tickets that were in the operator's possession at the commencement of the shift in order to evaluate the net sale of tickets during the course of the shift. This reconciliation has been conventionally performed manually on a four weekly basis by way of manual document checking at depot level, batch process data entry and manual reconciliation.

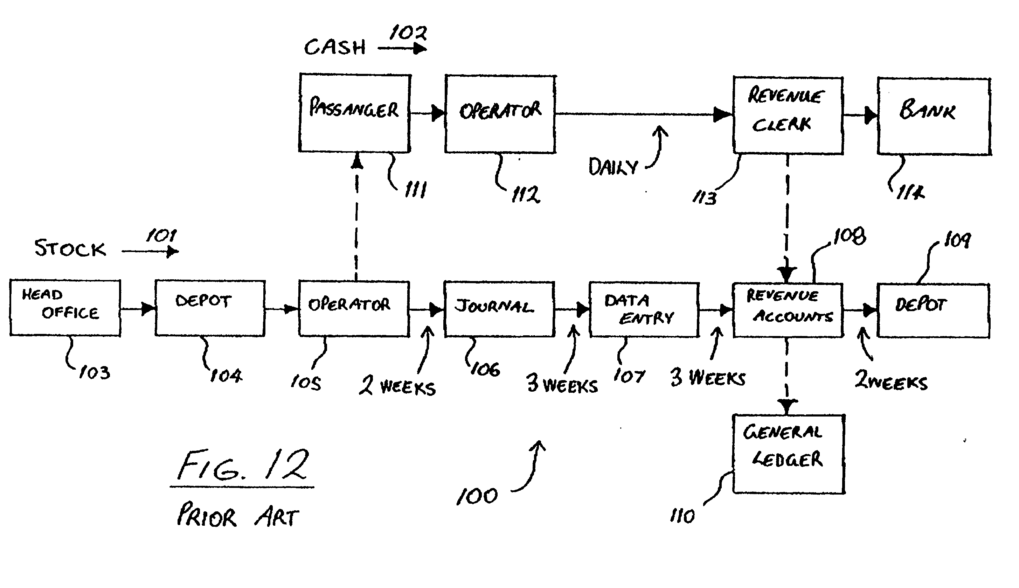

In Fig. 12, a conventional system 100 is shown indicating a stock flow 101 and corresponding cash flow 102. In this example, stock is tickets prior to sale which are issued, generally from a head office 103 to one or more depots 104 distributed about the system 100. At each depot 104, the stock (tickets) are provided to operators 105 (e.g. bus drivers, point of sale agents, etc) who, during the course of their daily shift, exchange the stock for cash with passengers 111 carried by the system 100, as seen in the cash flow 102. Cash provided to the operator at 112 is accumulated daily (per shift) and handed to a revenue clerk 113 who updates the revenue accounts record 108 and deposits the cash in a bank 114. The operator, generally daily, but in some cases over two weeks, provides a journal 106 of stock sales, usually by recording ticket serial numbers. The journal 106 is then manually entered 107 into a data base which reconciles with the revenue accounts 108. In the worst case, these steps can take up to three weeks each. Upon reconciliation of stock and cash, a general ledger 110 is produced indicating net revenue. This can be returned to the depot 109 for local records.

Accordingly, statistical data regarding the operation of the system 100 lag by many weeks the occurrence of particular events. Generally, where a large number of operators exist, typically 3,000 spread amongst three shifts per day in the case of the Applicant, the task of collating the relevant revenue and statistical information becomes a labour intensive and time consuming manual process of substantial expense.

It is an object of the present invention to substantially overcome, or ameliorate, the abovementioned difficulties through provision of a substantially automated ticket accounting and revenue collection system.

In accordance with one aspect of the present invention there is disclosed a system for selling tickets and accounting for their sale, said system comprising:

a plurality of tickets each of which is uniquely identifiable by at least a two part ticket number encoded thereon whereby one part of each said ticket number identifies a particular type of ticket offered for sale and another part identifies a serial number of that type of ticket;

a plurality of ticket dispensing means that are individually identifiable and from which tickets are dispensed in exchange for monies received therefor, each said ticket dispensing means being portable by a corresponding operator in relation to a plurality of depots, said operators being based from a home one of said depots;

counting means located within each said depot and communicating with a local processing means located within each said depot, said counting means being for the counting of monies received by each said operator that deposits monies therein, said counting means outputting to said local processing means a value of monies deposited by said operator;

reading means located within each said depot and communicating with said local processing means, said reading means being operable by said operators to identify those tickets remaining unsold at the end of an operator's shift; and

a communication network interconnecting each of said local processing means within each said depot together with a host processing means located at any point within said network; whereby

the number and type of tickets presented to each said operator for sale are inputted to each said local processing means at each respective home depot, at the end of each of said operator's shifts, said reading means in identifying those tickets remaining unsold and communicating such information to said local processing means, allowing said local processing means to determine the value of tickets sold by each said operator, said value being compared with the value of monies counted by said counting means to determine an outstanding liability owed by said operator, and information relating to ticket sales and revenue collected is stored within said local processing means and/or transmitted to said host processing means to form a data base of information relating to the sale of and accounting for tickets within said system.

Preferably, the tickets have a third part comprising a check digit based on the serial number of the ticket. The check digit is adapted to prevent fraudlent use of each ticket. Also preferably, the reading means identifies the operator and the operator's home depot.

A method of selling or dispensing tickets at a plurality of locations from portable ticket dispensing apparatus is also disclosed.

A system operated in accordance with the present invention offers the advantages over conventional systems in that the net revenue collected at any time is readily available and that statistical methods can be easily applied to the data base in order to jointly assess the operational and cost effectiveness of different types of ticket sales, and other combinations and permutations including shift variations, different time periods and seasonal changes in system usage.

A number of embodiments of the present invention will now be described with reference to the drawings in which:

Fig. 1 is a schematic block diagram representation of the preferred embodiment;

Fig. 2 is a schematic block diagram representation of a depot level network in Fig. 1;

Fig. 3 is a menu for a Ticket Receipts software module;

Fig. 4 is a menu for a Cash Receipts software module;

Fig. 5 is a menu for an Operator software module;

Fig. 6 is a menu for an Account Reconciliation software module;

Fig. 7 is a menu for a Report software module;

Fig. 8 is a menu for a Stock Control software module;

Fig. 9 is a menu for a Statistics software module;

Fig. 10 is a menu for a System Maintenance software module;

Fig. 11 is a menu for an Area Manager software module; and

Fig. 12 is a schematic block diagram representation of a prior art accounting system.

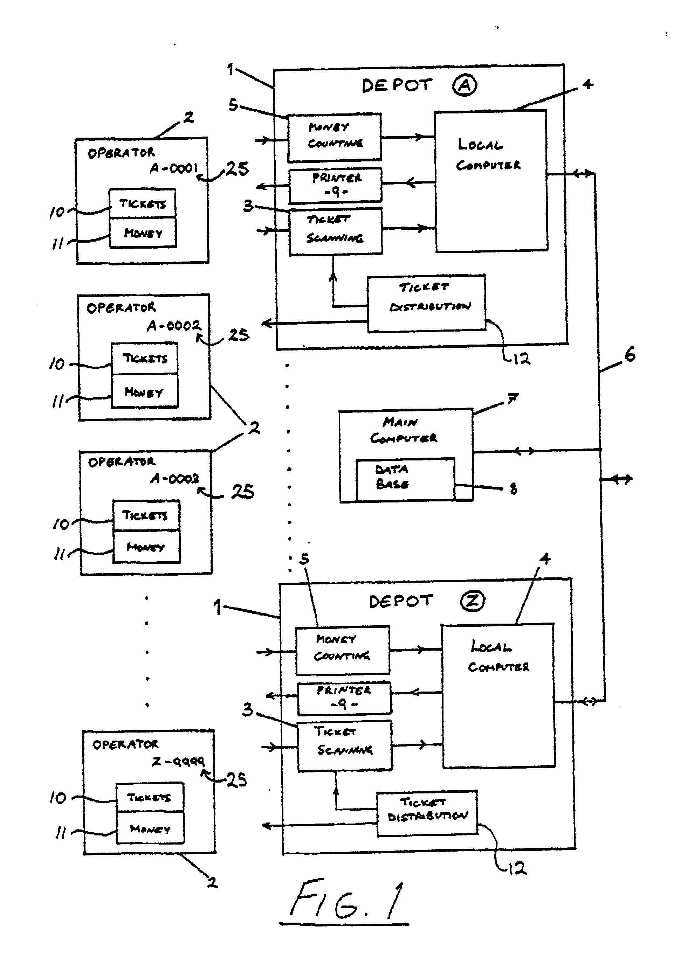

Referring to Fig. 1, a transit operators revenue accounting system (TORAS) is shown comprising a number of transport depots 1, of which only two are illustrated for clarity. Associated with each of the depots 1 is a set comprising a plurality of transport operators 2. Each operator 2 within system, is uniquely identifiable by a number 25 which includes reference to their home depot and an identification number associated with that depot. Operators are persons who sell tickets and in the case of the Applicant can be bus drivers, queue conductors, fixed point of sale agents, revenue collection officers or transit liason officers.

Tickets 10 used within the system are individually identifiable by means of a number (not shown illustrated) encoded upon the ticket. The number preferably has three sections, the first section identifying the type of ticket 10 and relating to a type and/or length of journey being travelled. The information encoded in the first section can be representative of, for example, adult or concession fare, the number of sections or length of journey being travelled, a periodical ticket valid for a week or a month, etc. The second section of the identifying number is a serial number identifying tickets 10 within a particular type. The third part is a check digit based on the serial number of the ticket 10. The purpose of the check digit is to prevent fraudlent use of each ticket 10. The method of encoding the ticket number upon the tickets 10 can be any known means such as the printing of characters using ORCA or ORCB or the printing of a bar code.

Tickets 10 for sale to customers who commute on the transport system are generally distributed from within each depot 1 to each operator 2 home based at that particular depot 1. Tickets can also be distributed to operators from any depot within the system not necessarily his home depot. Ticket distribution 12 to operators 1 is recorded by a ticket scanning device 3 that reads the operator 2 (debtor) and encoded ticket number(s) and records same in a corresponding local computing system 4 located at each depot 1 networked to the system. As well as ticket transfer and distribution the system automatically reports on all aspects of stock control. The recorded information relates to the ticket type and distributed ticket number of each type provided to each operator 2. Examples of such scanning devices 3 are optical character recognition or bar code recongnition devices, know per se, as applicable to the type of encoding being used.

In the course of an operator's 2 shift, tickets 10 are provided to commuters in exchange for monies 11 received therefor, each commuter receiving a ticket type that relates to the journey being travelled and a number that identifies the particular ticket sold to the commuter.

At the end of an operator's 2 shift, and upon return to the home depot, the operator 2 deposits monies 11 received in an automatic money counting machine 5. Each counting machine 5 counts the received monies 11, both coin and notes, and issues a receipt for the transaction. It then transmits to the local computer 4 a value of monies received to credit the operator's 2 account. Other information downloaded to the computer 4 includes cash box clearance, account shorage payments and any suspense account details.

The operator 2 then proceeds to a scanning station. At the scanning station the operator makes use of the scanning device 3 to check the status of his/her account and/or to record the ticket numbers remaining in the operator's ticket case at the completion of the shift. This information is then transmitted to the local computer 4 which, when combined with the ticket distribution data, and ticket sales information from a previous shift, can then calculate the number of each particular type of tickets sold in the course of the shift and the corresponding value representing the net revenue of tickets sold during the shift. This value is then debited to the operator's account stored within the local computer 4. The local computer 4 displays details of the debtor's account on a monitor and then produces an invoice on printer 9 for the operator 2 that indicates each of the following: opening and closing ticket number for the shift, ticket type description, ticket value, quantity sold, extended value (quantity multiplied by cost), and the outstanding liability. The outstanding liability represents the difference between monies deposited by the operator and the calculated net revenue of tickets sold during the shift. The invoice also displays details relating to any previous payments including the amount carried forward from previous invoice transfers or adjusments, any advance coin payments, final coin payment, tickets for re-supply as well as indicating the status of the coin counter/computer link. Each invoice has a unique invoice number pertaining to that debtor. A weekly and four weekly debtor statement is also produced.

The local computer 4 thus contains all relevant tickets sales information relating to each particular operator over each and every shift performed. In the case of on-board ticketing the computer also holds statistical data, roster/schedule data and timekeeping (payroll) data.

Each local computer 4, and consequently each depot 1, within the system is linked to each other via a communications network 6. The communications network 6 can also link a main computer 7 not necessarily located within any one of the depots 1. The communications network 6 is used to transmit local depot information from each local computer 4 to the main computer 7 which then compiles the ticket sales information into a data base 8 as well as downloading financial and statistical information to a general ledger file which forms part of a financial system. The communications network 6 can be of any known type such as telephone land lines, dedicated lines such as optical fibres, radio or microwave links.

The communications network 6 also performs another function in transmitting data between individual depots 1. For example, during the course of a shift, an operator 2 may wish to deposit a large portion of the monies received thus reducing the risk of, and possible loss due to, theft. The operator 2 can deposit the monies in any money counting machine 5 at any depot 1 located within the system. Once the operator 2 identifies himself to the system using the money counting machine 5, the machine counts the money whose value is then transmitted to the operator's home depot and credited to the operator's own account. A similar process can occur at the end of a shift if a shift is completed at a depot other than a home depot whereby ticket information obtained by the ticket scanning device 3 can also be transmitted to the home depot. Other devices attached to the main computer 7 include scanning devices, monitors, laser printers and dot matrix printers.

An alternative embodiment of the present invention can be implemented in which a ticket dispensing machine (not illustrated) mounted on the bus or kerbside is used by the operator 2 or in stand alone mode to dispense tickets to commuters. The ticket dispensing machine preferably has the features of individually numbering tickets and ticket types as sold and also has a suitable memory, such as a so-called "smart card"/data cassette to retain ticket sales and statistical information. A further enhancement of the on-bus ticket vending machine includes interfacing to a roster/scheduling and timekeeping package (resident in the local computer 4). Also as on-bus engineering module can be provided to down load to the on-boards bus ticketing module details relating to the bus hours of use, mileage, speeds, gearbox and engine temperatures.

When the operator downloads details of his daily ticket sales and statistics to the depot the engineering data is also downloaded. This embodiment eliminates the requirement for ticket distribution as needed in the previous embodiment. At the end of a shift in which an operator used a ticket dispensing machine, it is only necessary for the operator to withdraw the smart card/data cassette from the dispensing machine and insert the smart card into an appropriate reading device (PMR) connected to the local computer 4. The local computer 4 then extracts all relevant ticket sales/statistical information from the smart card/data cassette. The requirement for money counting would still exist in the manner as earlier described.

An additional feature that can be included within the system, is a ticket inspection device (not illustrated) that is carried and operated by a Transit Liason Officer in order to detect fare evasion and abuse. Such a device is small and portable and comprises a ticket scanning device (similar to the device 3 as earlier described) and a printer together with a store of information. The store of information is in the form of a smart card/data module as previously described. The store of information contains particular ticket numbers that have been subject to abuse and were consequently invalidated as well as bus operators opening ticket numbers. Use of a such a device in checking tickets carried by commuters enables a Transit Liason Officer to readily identify an abuse of the system and issue an infringement notice forthwith.

The primary advantage of the present invention lies in the direct accountability of each and every ticket within the system. That accountability consequently provides an enormous data base of ticket sales information. That data base is readily accessible to managers of the system who can then apply to it any of many statistical methods in order to provide clear information as to system usage, efficiency, and performance. Inherent with these advantages is the total accountability of tickets and revenue at each and every stage throughout the system and thus the capability of assessing ticket fraud by ticket distributors, operators, commuters or cash handling houses.

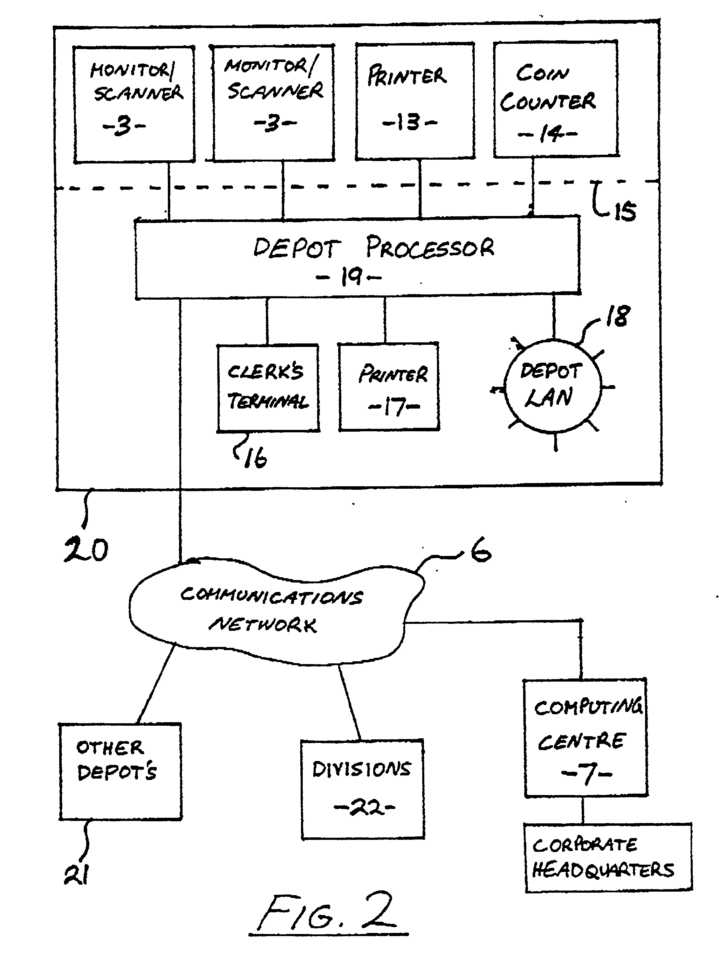

Fig. 2 shows an examplary depot 20 which can form part of the system of Fig. 1. The depot 20 includes two operative regions separated by a wall 15. In one region, two scanners 3, a printer 13 and a coin counter 14 are provided for use by the operators 2 of the system. These devices input data to a depot processor 19 which acts as the local computer 4 as well as a distribution point for a data base. Distribution throughout the depot 20 is achieved using a local area network (LAN) 18. Generally, a clerk will be tasked with overseeing the operation of the system within each depot and a dedicated terminal 16 and printer 17 are provided for that purpose. The clerk has the ability to implement certain system functions that are to be described later. The depot processor 19 connects via the communications network 6, which is preferably an X.25 network to a number of other depots 21, the corporate computing centre 7 and any corporate divisions 22 which may make use of statistical data provided from the depots 20,21 or from the computing centre 7.

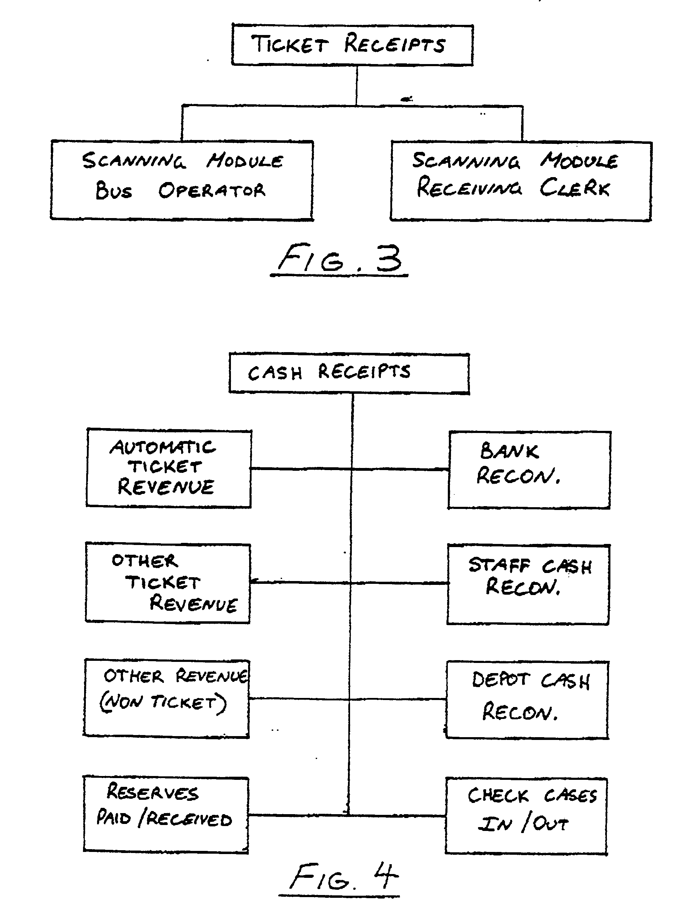

The operation of the system of Figs. 1 and 2 is controlled by various computer programmes which are functionally depicted in Figs. 3 to 11.

Fig. 3 shows a TICKET RECEIPTS module which is used for scanning of the tickets either by a bus operator on completion of a shift, or by a receiving clerk upon issuing the tickets to operators. This module allows for the location of a ticket to be determined within the system at any time.

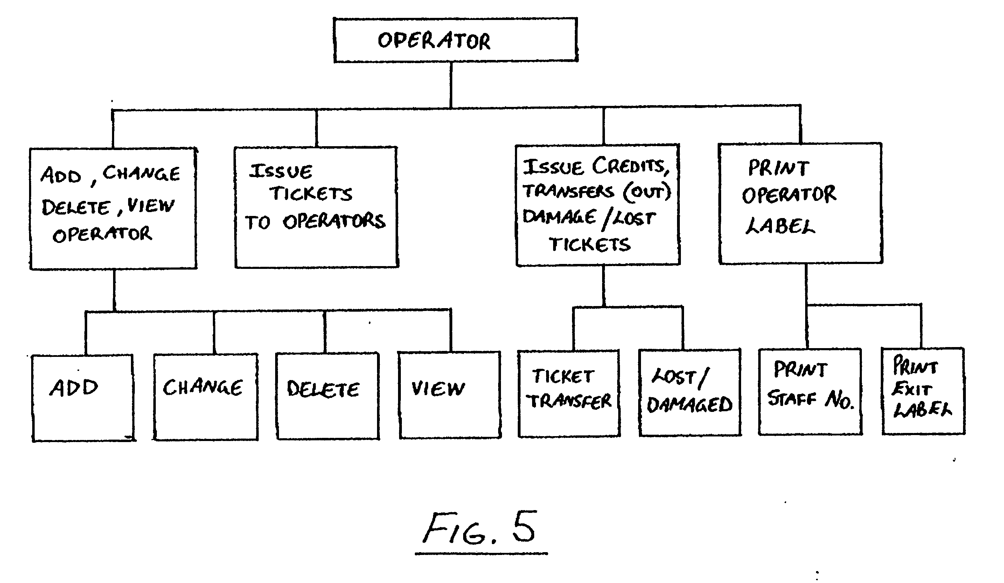

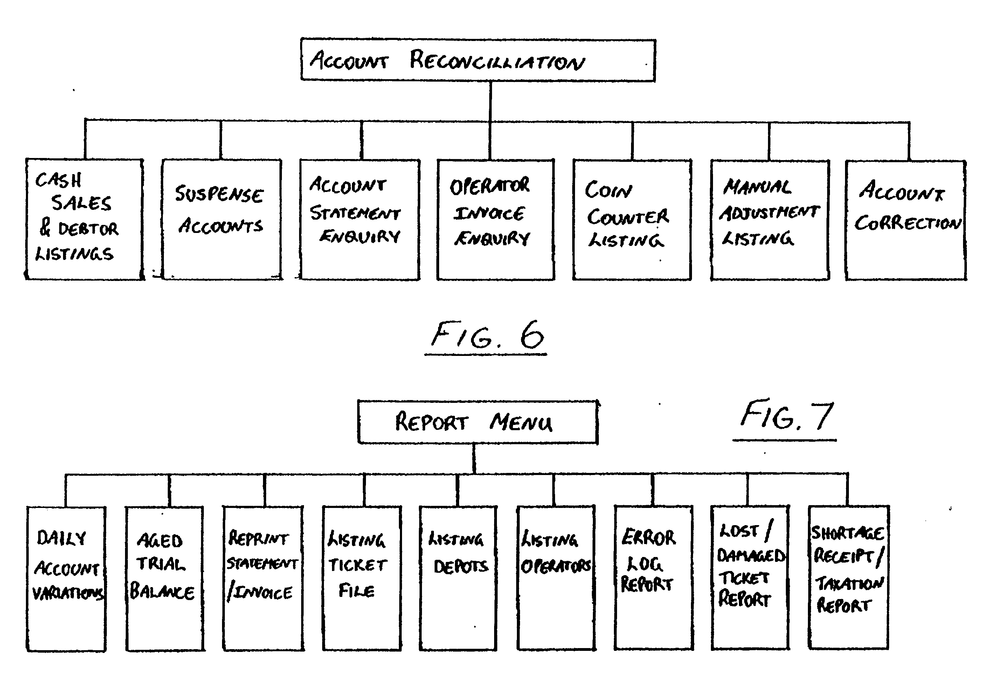

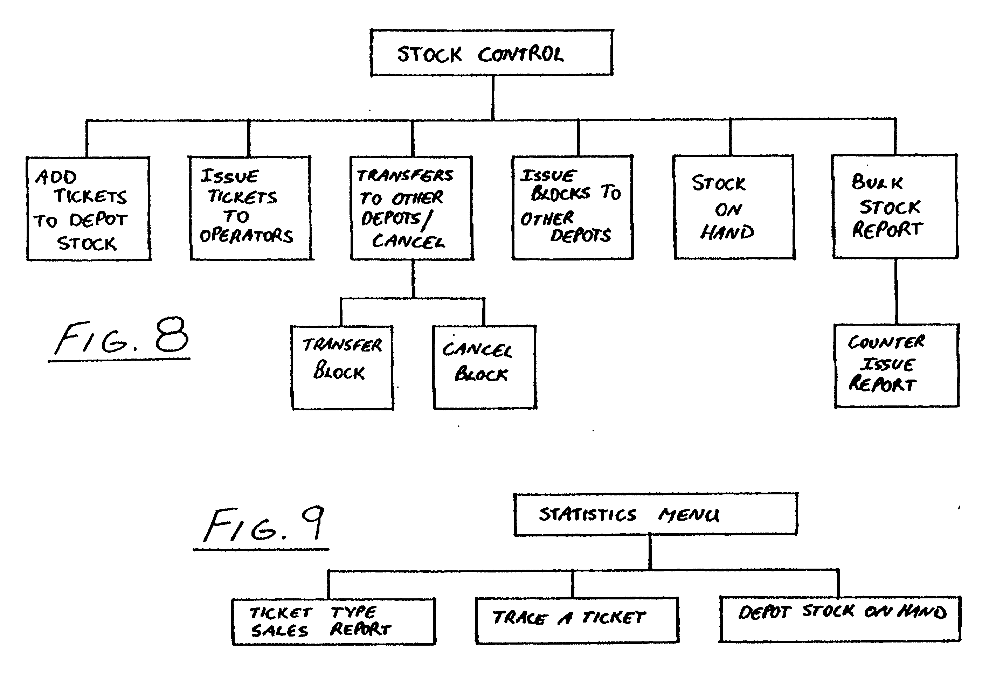

Fig. 4 shows a CASH RECEIPTS module in which cash is reconciled by a clerk within each depot 1. Cash is received by the cash receipts module either from automatic ticket revenue obtained via the coin counters 5, other ticket revenue such as cash obtained from manual systems as well as other revenue such as ticket sales for which no specific ticket is provided. Other revenue also includes monies obtained through fines for fare evasion. The CASH RECEIPTS module also controls reserves of cash paid and received to operators. At the commencement of employment, an operator is provided with a reserve of cash which acts as change for the day's transactions. At the end of a shift, the operator 2 has the option of depositing all monies into the money counter 5 for reconciliation, or, as generally happens due to shift variations, the operator 2 retains a small portion of those monies as change for the next shift. Accordingly, this module maintains a current account for each operator 2 within the debot base system. The CASH RECEIPTS module also includes reconciliation routines which monitor the flow of monies from the depot to the bank, between individual members of staff, the amount of funds held by the depot as well as checking ticket cases for operators home based at other depots.

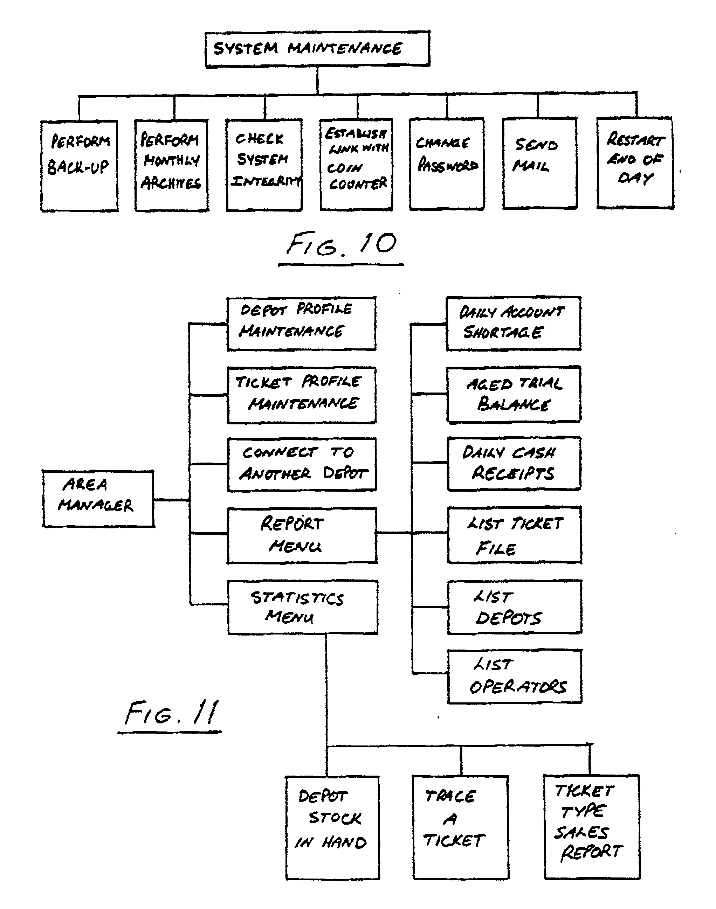

Fig. 5 shows an OPERATOR module which is accessed and implemented by the depot clerk. The module allows for processing of data relating to each and every operator 2 within the system and provides for adding new operators to the system as well as changing personnel details. An operator can only be deleted from the system when that operator's account has no debt. The module also controls the issuing of tickets to the operators, as well as issuing credits and upkeeping the operator's account in relation to ticket transfers and lost and damaged tickets. Each operator is also designated by a unique number which is preferably provided in the forms of label which can be printed through the operator module.

An ACCOUNT RECONCILIATION module is shown in Fig. 6 which allows for the depot clerk to either view and/or print account details relating to various debtors within the system. Cash sales are checked against banking records and can provide a listing of various debtors to the system. Suspense accounts are provided whereby the system will accept monies from an operator not validated in the data base. The money is filed into a suspense account which can be reconciled once the particular operator is validated onto the system. Account statement enquiries can be provided weekly and monthly and generally, invoices are provided for each and every transaction within the system. Operator invoices can also be viewed to assess the financial history of each operator so as to determine work performance. A coin counter listing can be directly obtained from the coin counters 5 or indirectly from the depot computer 19 as the coin counters 5 are debtors to the system. Manual adjustments as well as accounts corrections can also be performed.

Fig. 7 shows a REPORT menu for various operations noted by the system. Daily account variations can be reported on every account within the system on a daily basis. Such listing highlight any monetary discrepancies either plus or minus for dollars. Aged trial balances can be provided daily, weekly, or monthly (28 days) to provide a record of agent ticket sales for various periods. The REPORT menu also includes an error log report which lists any error, unauthorised access, incorrect scanning of ticket blocks, as well as auditing tickets issued to operators without entry. Lost and/or damaged tickets can also be reported for audit purposes and reconciliation with transit liaison officers. The also menu provides for the printing of a taxation report for any operator shortage over a four week accounting period. Where, over a four week period, an operator's account is in debt, the operator is required to make good that debt to clear his/her account. The module then prints a receipt which can be used for personal taxation purposes as a cost incurred in earning an income. This covers the situation where an operator may inadvertently issue two tickets to a traveller, yet only receive monies in relation to one. If this happens only a number of occasions over a four week period, a reasonable sum may be built up.

Fig. 8 shows a STOCK CONTROL module which controls the flow of stock into, around and out of the system. Where a new delivery of tickets is received, these are generally provided in numerical order with the first and last ticket numbers indicated on the outer packaging. These can be scanned which would then add those tickets to the depot stock. Tickets can be transferred to other depots in a similar manner. Where a particular ticket is no longer required for use, generally through change of fare, those tickets can be withdrawn from the system and cancelled.

Fig. 9 shows a STATISTICS menu which can produce a ticket type sales report for all types of tickets sold by the system over any designated period of time. The menu can also trace the progress of any particular ticket throughout the system which may be useful in detecting fare evasion. The statistics menu also provides a reconciliation of stock on hand together with monies currently received whereby a daily revenue balance is readily provided. This revenue balance is updated at the end of each shift, wherein the revenue balance is known at each of those times.

Fig. 10 shows a SYSTEMS MAINTENANCE module which enables the performance of various functions associated with general computing systems.

As shown in Fig. 2, various corporate divisions can be connected to the communications network 6 and Fig. 11 shows a menu whereby an area manager is provided with a module to access various types of data regarding the operation of the system.

The foregoing describes only a number of embodiments of the present invention and other embodiments, obvious to those skilled in the art, will be apparent without departing from the scope of the present invention.

**Claims**

1. A system for selling tickets (10) and accounting for their sale, said system comprising:

a plurality of tickets (10) each of which is uniquely identifiable by at least a two part ticket number (25) encoded thereon whereby one part of each said ticket number (25) identifies a particular type of ticket (10) offered for sale and another part identifies a serial number of that type of ticket (10);

a plurality of ticket dispensing means (2, 12) that are invididually identifiable and from which tickets (10) are dispensed in exchange for monies (11) received therefor, each said ticket dispensing means (2, 12) being portable by a corresponding operator (2) in relation to a plurality of depots (1), said operators (2) being based from a home one of said depots (1);

counting means (5) located within each said depot (1) and communicating with a local processing means (4) located within each said depot (1), said counting means (5) being for the counting of monies (11) received by each said operator (2) that deposits monies (11) therein, said counting means (5) outputting to said local processing means (4) a value of monies (11) deposited by said operator (2);

reading means (3) located within each said depot (1) and communicating with said local processing means (4), said reading means (3) being operable by said operators (2) to identify those tickets (10) remaining unsold at the end of an operator's shift; and

a communications network (6) interconnecting each of said local processing means (4) within each said depot (1) together with a host processing means (7) located at any point within said network (6); whereby

the number and type of tickets (10) presented to each said operator (2) for sale are inputted to each said local processing means (4) at each respective home depot (1), at the end of each of said operator's shifts, said reading means (3) in indentifying those tickets (10) remaining unsold and communicating such information to said local processing means (4), allowing said local processing means (4) to determine the value of tickets (10) sold by each said operator (2), said value being compared with the value of monies (11) counted by said counting means (5) to determine an outstanding liability owed by said operator (2), and information relating to ticket (10) sales and revenue collected is stored within said local processing means (4) and/or transmitted to said host processing means (7) to form a data base (8) of information relating to the sale of and accounting for tickets (10) within said system.

2. A system as claimed in claim 1, wherein said ticket number (25) includes a third part comprising a check digit related to the serial number.

3. A system as claimed in claim 1 or 2, wherein said reading means (3) further identifies each particular operator (2) and that operator's home depot (1).

4. A system as claimed in claim 3, wherein said counting means (5) and said reading means (3) together produce, via a printer (9) and said local processing means (4), a transaction invoice identifying the particular operator (2), the operator's home depot (1), the monies (11) deposited into said counting means (5), and those tickets (10) remaining unsold.

5. A system as claimed in any one of the preceding claims, wherein said counting means (5) comprises one or more coin counters (14).

6. A system as claimed in any one of claims 1 or 4, wherein said counting means (5) comprises one or more note counters.

7. A system as claimed in any one of claims 1 to 4, wherein said counting means (5) includes one or more sets of coin and note counters.

8. A system as claimed in any one of the preceding claims, wherein said reading means (3) comprises either a bar code reader or character recognition device, or both.

9. A system as claimed in any one of the preceding claims, wherein said ticket dispensing means (2, 12) comprises a book of individual tickets carried by the operator (2).

10. A system as claimed in any one of claims 1 to 8, wherein said ticket dispensing means (2, 12) comprises a ticket printer and keyboard device operable by said operator to print said tickets (10) at a time of sale.

11. A system as claimed in claim 10, wherein said ticket dispensing means (2, 12) includes a memory for recording data relating to tickets (10) printed by said ticket dispensing means (2, 12) whereby said data memory can be removed from said ticket dispensing means (2, 12) and input to said reading means (3) to record ticket sales made by a corresponding operator (2).

12. A system as claimed in claim 11, wherein said memory also records operational data associated with said operator (2) and/or a vehicle under the control of said operator (2).

13. A transit operator's revenue accounting system comprising the system as claimed in any one of the preceding claims.

FIG. 1

FIG. 2

```
            ┌──────────────────────────┐
            │    TICKET  RECEIPTS       │
            └──────────────────────────┘
                        │
         ┌──────────────┴──────────────┐
┌─────────────────────┐      ┌─────────────────────┐
│  SCANNING  MODULE   │      │  SCANNING  MODULE   │
│   BUS  OPERATOR     │      │  RECEIVING  CLERK   │
└─────────────────────┘      └─────────────────────┘
```

## FIG. 3

```
            ┌──────────────────────────┐
            │     CASH  RECEIPTS        │
            └──────────────────────────┘
                        │
┌─────────────────┐     │     ┌─────────────────┐
│   AUTOMATIC     │     │     │    BANK         │
│    TICKET       │─────┼─────│   RECON.        │
│   REVENUE       │     │     │                 │
└─────────────────┘     │     └─────────────────┘
                        │
┌─────────────────┐     │     ┌─────────────────┐
│   OTHER         │     │     │  STAFF CASH     │
│   TICKET        │◄────┼─────│   RECON.        │
│   REVENUE       │     │     │                 │
└─────────────────┘     │     └─────────────────┘
                        │
┌─────────────────┐     │     ┌─────────────────┐
│ OTHER REVENUE   │     │     │  DEPOT CASH     │
│ (NON TICKET)    │─────┼─────│   RECON.        │
│                 │     │     │                 │
└─────────────────┘     │     └─────────────────┘
                        │
┌─────────────────┐     │     ┌─────────────────┐
│   RESERVES      │     │     │  CHECK CASES    │
│ PAID /RECEIVED  │─────┴─────│   IN /OUT       │
└─────────────────┘           └─────────────────┘
```

## FIG. 4

Fig. 5

OPERATOR
- ADD, CHANGE, DELETE, VIEW OPERATOR
  - ADD
  - CHANGE
  - DELETE
  - VIEW
- ISSUE TICKETS TO OPERATORS
- ISSUE CREDITS, TRANSFERS (OUT) DAMAGE/LOST TICKETS
  - TICKET TRANSFER
  - LOST/DAMAGED
- PRINT OPERATOR LABEL
  - PRINT STAFF No.
  - PRINT EXIT LABEL

EP 0 461 927 A2

```
┌─────────────────────────────────┐
│   ACCOUNT  RECONCILLIATION       │
└─────────────────────────────────┘
```

| CASH SALES & DEBTOR LISTINGS | SUSPENSE ACCOUNTS | ACCOUNT STATEMENT ENQUIRY | OPERATOR INVOICE ENQUIRY | COIN COUNTER LISTING | MANUAL ADJUSTMENT LISTING | ACCOUNT CORRECTION |

## FIG. 6

```
┌──────────────────┐
│   REPORT  MENU   │
└──────────────────┘
```

## FIG. 7

| DAILY ACCOUNT VARIATIONS | AGED TRIAL BALANCE | REPRINT STATEMENT /INVOICE | LISTING TICKET FILE | LISTING DEPOTS | LISTING OPERATORS | ERROR LOG REPORT | LOST/ DAMAGED TICKET REPORT | SHORTAGE RECEIPT/ TAXATION REPORT |

EP 0 461 927 A2

```
                        ┌──────────────────┐
                        │  STOCK CONTROL   │
                        └──────────────────┘
                                 │
   ┌──────────┬──────────┬───────┼───────┬──────────┬──────────┐
┌────────┐ ┌────────┐ ┌────────┐ ┌────────┐ ┌────────┐ ┌────────┐
│ ADD    │ │ ISSUE  │ │TRANSFERS│ │ISSUE  │ │ STOCK  │ │ BULK   │
│TICKETS │ │TICKETS │ │TO OTHER │ │BLOCKS TO│ │ ON    │ │ STOCK  │
│TO DEPOT│ │ TO     │ │DEPOTS/  │ │ OTHER  │ │ HAND   │ │ REPORT │
│ STOCK  │ │OPERATORS│ │CANCEL  │ │ DEPOTS │ │        │ │        │
└────────┘ └────────┘ └────────┘ └────────┘ └────────┘ └────────┘
                          │                                 │
                   ┌──────┴──────┐                    ┌─────────┐
              ┌─────────┐  ┌─────────┐                │ COUNTER │
              │TRANSFER │  │ CANCEL  │                │ ISSUE   │
              │ BLOCK   │  │ BLOCK   │                │ REPORT  │
              └─────────┘  └─────────┘                └─────────┘
```

FIG. 8

FIG. 9

```
                  ┌──────────────────┐
                  │  STATISTICS MENU │
                  └──────────────────┘
                           │
          ┌────────────────┼────────────────┐
    ┌─────────────┐ ┌─────────────┐ ┌──────────────────┐
    │ TICKET TYPE │ │TRACE A TICKET│ │DEPOT STOCK ON HAND│
    │SALES REPORT │ │             │ │                  │
    └─────────────┘ └─────────────┘ └──────────────────┘
```

SYSTEM MAINTENANCE

| PERFORM BACK-UP | PERFORM MONTHLY ARCHIVES | CHECK SYSTEM INTEGRITY | ESTABLISH LINK WITH COIN COUNTER | CHANGE PASSWORD | SEND MAIL | RESTART END OF DAY |

FIG. 10

AREA MANAGER

- DEPOT PROFILE MAINTENANCE
- TICKET PROFILE MAINTENANCE
- CONNECT TO ANOTHER DEPOT
- REPORT MENU
  - DAILY ACCOUNT SHORTAGE
  - AGED TRIAL BALANCE
  - DAILY CASH RECEIPTS
  - LIST TICKET FILE
  - LIST DEPOTS
  - LIST OPERATORS
- STATISTICS MENU
  - DEPOT STOCK IN HAND
  - TRACE A TICKET
  - TICKET TYPE SALES REPORT

FIG. 11

EP 0 461 927 A2

CASH → *102*

PASSANGER → OPERATOR → REVENUE CLERK → BANK

DAILY

*111*  *112*  *113*  *114*

STOCK → *101*

HEAD OFFICE → DEPOT → OPERATOR → JOURNAL → DATA ENTRY → REVENUE ACCOUNTS → DEPOT

*108*  *109*

*103*  *104*  *105*  2 WEEKS  *106*  3 WEEKS  *107*  3 WEEKS  2 WEEKS

GENERAL LEDGER

*110*

FIG. 12
PRIOR ART

*100*